# FASCICULE DE BREVET EUROPEEN

(11) **EP 3 077 346 B1**
(45) Date de publication et mention de la délivrance du brevet: **23.10.2019**
(21) Numéro de dépôt: 14808597.0
(22) Date de dépôt: 04.12.2014
(51) Int. Cl.: C04B 28/10, C04B 20/00, C04B 2/06

(54) **COMPOSITION DE LIANT POUR MORTIERS ET ENDUITS PERFECTIONNES**
BINDEMITTELZUSAMMENSETZUNG FÜR VERBESSERTE MÖRTEL UND BESCHICHTUNGEN
BINDER COMPOSITION FOR IMPROVED MORTARS AND COATINGS

(30) Priorité: 06.12.2013 BE 201300819
(43) Date de publication de la demande: 12.10.2016
(73) Titulaire: S.A. Lhoist Recherche et Développement, 1342 Ottignies-Louvain-la-Neuve (BE)
(72) Inventeur: ULRIKE, Peter, B-1050 Ixelles (BE); DAVILLER, Daniel, F-25870 Chatillon-le-Duc (FR)
(74) Mandataire: Gevers Patents
(86) Numéro de dépôt international: PCT/EP2014/076504
(87) Numéro de publication internationale: WO 2015/082585

(56) Documents cités:
- EP-A2- 2 404 885
- EP-B1- 1 406 849
- WO-A1-2008/034616
- WO-A1-2011/098814
- C.FERRARIS and E.GARBOCZI: "Measuring Cement Particle Size and Surface Area by Laser Diffraction", National Cooperative Highway Research Program , 30 avril 2013 (2013-04-30), pages 1-A-12, XP55145401, Washington, DC, USA Extrait de l'Internet: URL:http://onlinepubs.trb.org/onlinepubs/n chrp/nchrp_rrd_382.pdf [extrait le 2014-10-09]
- Johan B Holmberg: "Slaking of lime", , 16 décembre 2004 (2004-12-16), XP55114422, Extrait de l'Internet: URL:http://www.chemeng.lth.se/exjobb/009.p df [extrait le 2014-04-16]
- Oates J A H: "LIME AND LIMESTONE: CHEMISTRY AND TECHNOLOGY, PRODUCTION AND USES", 1 janvier 1998 (1998-01-01), Wiley-VCH, WEINHEIM, XP002735206, page 218-223,258,259,267-284, cité dans la demande page 222, alinéa 20.7.2

## Description

La présente invention se rapporte à une composition de liant pour mortiers et enduits perfectionnés, comprenant un premier composant minéral conventionnel et un deuxième composant à base de chaux éteinte pulvérulente.

Par le terme « mortier », on entend, au sens de la présente invention, un mélange d'un ou plusieurs liants minéraux comme la chaux, un ciment ou analogue et d'agrégat(s), principalement du sable ; il s'agit alors d'un mortier traditionnel. Un tel mortier est utilisé en construction pour lier et/ou pour recouvrir les éléments de construction et peut également contenir des fillers, un ou plusieurs liants organiques, des additifs et/ou des adjuvants. Un mortier à haute valeur ajoutée ou hautement additivé, dont la composition et la fabrication sont définies afin d'obtenir des propriétés spécifiques, peut être qualifié de perfectionné ou performanciel ou encore formulé (*designed mortar* en anglais). On y inclut notamment les mortiers colle, les sols auto-lissants, les chapes, les mortiers de réparation, certains mortiers de maçonnerie, etc...

Par le terme « enduit », on entend une composition de mortier destinée à être appliquée en couche en une ou plusieurs passes. Un enduit est donc un mortier à application de surface à l'extérieur (« render » en anglais) ou à l'intérieur (« plaster » en anglais).

Les mortiers et enduits peuvent être composés à partir de formulations de liants à prise hydraulique, pouzzolanique ou aérienne, ou de leur mélange. L'utilisation de chaux aérienne ou chaux éteinte présente des avantages par rapport aux liants sans chaux : une meilleure plasticité ayant pour résultat une meilleure maniabilité / applicabilité, une meilleure rétention d'eau qui permet une tolérance améliorée vis-à-vis de variations dans la porosité du support, une meilleure perméabilité à la vapeur d'eau, et une meilleure flexibilité du système durci.

Par ailleurs, il est bien connu que, dans les mortiers et enduits perfectionnés (aussi appelés performanciels ou formulés), l'ajout d'additifs, notamment d'additifs organiques, est une voie de choix à des fins d'optimisation des performances applicatives.

La chaux éteinte est constituée d'un ensemble de particules solides, principalement de di-hydroxyde de calcium de formule Ca(OH)₂, et est le résultat industriel de l'extinction d'une chaux vive avec de l'eau, réaction également appelée hydratation. Ce produit est également connu sous le nom de chaux hydratée ou chaux aérienne et présente typiquement des surfaces spécifiques BET de l'ordre de 15 à 20 m²/g (J.A.H. Oates, Lime and Limestone-Chemistry and Technology, Production and Uses, 1998, p. 220).

Cette chaux éteinte ou hydratée (« slaked lime » or « hydrated lime » en anglais) ou aérienne (« air lime » en anglais) ou hydroxyde de calcium peut évidemment contenir des impuretés, à savoir des phases dérivées de SiO₂, Al₂O₃, Fe₂O₃, MnO, P₂O₅, K₂O et/ou SO₃, représentant globalement quelques dizaines de grammes par kilogramme. Néanmoins, la somme de ces impuretés, exprimées sous la forme des oxydes précités, ne dépasse pas 5 % en masse, de préférence 3 %, de préférence 2 % ou même 1 % de la masse de la chaux éteinte selon l'invention. En particulier, la chaux éteinte contient avantageusement moins de 1,5 % en masse de Fe₂O₃, de préférence moins de 1 % et de préférence moins de 0,3 %.

Une telle chaux éteinte peut contenir de l'oxyde et/ou de l'hydroxyde de magnésium. Suivant les teneurs en ces composés, on parlera de chaux magnésienne, dolomitique ou de dolomie, partiellement ou totalement éteinte.

Cette chaux éteinte peut aussi contenir de l'oxyde de calcium qui n'aurait pas été hydraté au cours de l'extinction ou issu d'une cuisson non uniforme (surcuisson localisée), tout comme elle peut contenir du carbonate de calcium CaCO₃ ou de magnésium MgCO₃. Ces carbonates peuvent provenir soit du calcaire initial (ou de la dolomie crue), dont est dérivée la chaux éteinte selon l'invention (incuits), soit d'une réaction de carbonatation partielle de la chaux éteinte au contact de l'air. La teneur en oxyde de calcium dans la chaux éteinte dans le cadre de la présente invention est généralement inférieure à 5 % en masse, de préférence inférieure à 2 % et de manière avantageuse inférieure à 1 %. Celle en carbonates est inférieure à 10 % en masse, de préférence inférieure à 6 % et de manière avantageuse inférieure à 4 %, de manière encore plus avantageuse inférieure à 3%.

Dans le domaine technique des mortiers et enduits à la chaux, dans le but d'améliorer les propriétés précitées, les enseignements existants proposent par exemple de travailler sur la surface spécifique et divulguent en réalité de nombreux résultats bien différents les uns des autres.

Par exemple, le document WO 2008034616 divulgue qu'on peut accélérer le développement des forces de compression des compositions de liant à prise hydraulique en ajoutant de la chaux à surface spécifique particulière.

La surface spécifique visée dans ce document est comprise entre 7 et 16 m²/g et les formes de réalisations préférentielles visent des chaux éteintes présentant une surface spécifique comprise entre 11 et 14 m²/g pour des teneurs en chaux d'environ 5% en poids par rapport au poids total du liant (ciment Portland).

Le document BE 1006309 enseigne quant à lui d'utiliser un procédé pour augmenter la surface spécifique et les propriétés plastiques de la chaux hydratée, en particulier avec un agent de modification chimique, pour lui conférer une surface spécifique beaucoup plus élevée. Cette invention a encore pour objet une chaux hydratée présentant une aptitude plus importante à retenir l'eau et à devenir plus plastique. De cette façon, la chaux éteinte ainsi produite peut être utilisée dans des mortiers en plus faibles proportions tout en permettant à ces derniers de conserver l'ouvrabilité exigée par les codes ou les normes.

Selon le document DE 102005018100, de l'hydroxyde de calcium de grande finesse est utilisé pour produire des mortiers ou des liants hydrauliques pour produire des bétons présentant des caractéristiques d'écoulement et de durcissement améliorées. Cet hydroxyde de calcium de grande finesse présente typiquement des surfaces spécifiques BET et de Blaine toutes deux élevées.

De plus, le document WO 9209528 prévoit l'utilisation d'hydroxyde de calcium ou chaux éteinte sous forme de laits ou de pâtes de Ca(OH)₂ et/ou Ca(OH)₂-Mg(OH)₂ dans l'industrie de la construction pour la fabrication de mortiers, enduits, etc... Ce document enseigne que la qualité des laits et/ou pâtes de Ca(OH)₂, éventuellement mélangés à du Mg(OH)₂, et leur propriété, par exemple leur réactivité, dépendent de la dimension et de la structure des agglomérats ou micelles de Ca(OH)₂ et/ou Ca(OH)₂-Mg(OH)₂ en suspension. La conclusion de ce document est en réalité que les particules de Ca(OH)₂ et/ou Ca(OH)₂-Mg(OH)₂ des agglomérats ou micelles doivent avoir une faible granulométrie et une grande porosité pour obtenir un lait ou pâte de haute réactivité et pour réduire ou éviter la sédimentation des particules. Toujours selon ce document, dans le cas des pâtes, une faible granulométrie et une grande porosité permettent d'obtenir des mortiers présentant une haute plasticité et un haut pouvoir de rétention d'eau.

En conséquence, il apparait que, dans le but d'avoir la plasticité élevée requise des enduits et des mortiers perfectionnés, ainsi que le pouvoir de rétention d'eau nécessaire à l'application sur tout type de surface,il faille plutôt opter pour une chaux éteinte à surface spécifique élevée.

Malgré les avantages précités, l'utilisation de liants à base de chaux éteinte génère également certains inconvénients comme par exemple la nécessité d'utiliser des teneurs élevées en additifs organiques typiquement présents dans les mortiers et enduits perfectionnés et dont le rôle est d'assurer des fonctions spécifiques comme la rétention d'eau, la gestion de la rhéologie (maniabilité / plasticité, coulabilité, seuil d'écoulement, ...), l'adhérence, la résistance à l'abrasion, l'hydrophobation ou encore l'entrainement d'air.

La présente invention vise à préserver les avantages précités des compositions de liants à base de chaux éteinte, tout en éliminant certains de leurs inconvénients renseignés ci-dessus ou encore en améliorant les propriétés de mortiers préparés au départ de ces formulations.

Pour résoudre ce problème, il est prévu suivant l'invention une composition de liant pour mortiers et enduits perfectionnées, comprenant un premier composant minéral conventionnel choisi dans le groupe constitué des ciments, des liants à maçonner, des liants pouzzolaniques et hydrauliques, du plâtre et de leurs mélanges, et un deuxième composant à base de chaux éteinte pulvérulente, dans laquelle ledit deuxième composant à base de chaux éteinte pulvérulente présente une surface spécifique calculée selon la méthode BET inférieure à 12 m²/g, en particulier inférieure à 11 m²/g, avantageusement inférieure à 10 m²/g, de préférence inférieure à 9 m²/g, et dans laquelle ledit deuxième composant est présent en une quantité égale ou supérieure à 12% en poids, de préférence égale ou supérieure à 15 % en poids, particulièrement égale ou supérieure à 20 % en poids, en particulier égale ou supérieure à 30 % en poids, avantageusement égale ou supérieure à 40% en poids et égale ou inférieure à 80% en poids, avantageusement égale ou inférieure à 70% en poids, en particulier égale ou inférieure à 60 % en poids, par rapport au poids total de ladite composition de liant. par rapport au poids total de ladite composition de liant.

La surface spécifique de la chaux éteinte selon la présente invention est mesurée par manométrie d'adsorption d'azote et calculée selon la méthode BET, après dégazage sous vide à 190°C pendant au moins 2 heures.

Il est important de ne pas confondre surface spécifique BET, mesurée par adsorption ou désorption d'azote après dégazage, et surface spécifique Blaine, mesurée par perméabilité à l'air. En effet, la méthode BET permet de déterminer la totalité de la surface spécifique d'un composé, en tenant notamment compte de sa porosité, et n'est pas directement dépendante de la taille des particules constitutives, tandis que la méthode Blaine permet de déterminer uniquement la surface externe des particules de ce composé et dépend directement de la taille de celles-ci. (Allan T., Particle Size Measurement, Vol. 2, Surface area and pore size détermination, cinquième édition, 1997, page 11, page 39).

La composition de liant selon la présente invention, lorsqu'elle est utilisée dans des mortiers « perfectionnés » ou « performanciels » ou « à haute valeur ajoutée » ou dans les enduits hautement additivés, permet de tirer profit de effets positifs de la chaux éteinte tout en maintenant les fonctionnalités des additifs organiques telles que la rétention d'eau, la maniabilité / rhéologie, l'entrainement d'air, l'adhérence, la résistance à l'abrasion et l'hydrophobation. En effet, en raison de la surface spécifique particulière de la chaux éteinte de la présente invention, l'adsorption de ces additifs organiques dans les pores des particules de chaux éteinte se voit fortement réduite. De plus, l'impact sur le coût de la composition de liant ou de mortiers et enduits produits à partir de celle-ci est particulièrement intéressant.

En effet, dans les enduits perfectionnés et les mortiers perfectionnés à haute teneur en additifs organiques, comme les mortiers colle, les sols auto-lissants, les mortiers de réparation, et certains mortiers de maçonnerie à haute valeur ajoutée, la composition de liant selon la présente invention, contenant de la chaux éteinte à basse surface spécifique, permet de réduire l'interaction de cette dernière avec les additifs organiques, , et en conséquence de réduire les risques d'inhibition de leur fonctionnalité dans le mortier ce qui évite donc de devoir augmenter significativement la teneur de ces additifs dans les compositions de mortiers et enduits « perfectionnés » ou « performanciels » ou « formulés ».

Par ailleurs, la composition de liant selon la présente invention permet également aux enduits et mortiers perfectionnés obtenus à partir de celle-ci de conserver des propriétés de plasticité et de rétention d'eau avantageuses. Cet effet est particulièrement inattendu puisque jusqu'à présent de telles caractéristiques ne semblaient pouvoir être obtenues qu'à l'aide de chaux éteinte à surface spécifique élevée.

Avantageusement, ledit deuxième composant à base de chaux éteinte pulvérulente présente une surface spécifique calculée selon la méthode BET inférieure à 8,5 m²/g de préférence inférieure à 8 m²/g, de manière préférentielle inférieure à 7,5 m²/g et en particulier inférieure à 7 m²/g.

Dans une forme de réalisation particulière, lesdits ciments sont choisis dans le groupe des ciments courants (gris ou blanc), des ciments réfractaires, alumineux fondus, prompts, des ciments portland, des laitiers de hauts-fourneaux, des cendres volantes et de leurs mélanges.

Des teneurs plus faibles dudit deuxième composant dans ladite composition de liant ne permettraient ni de tirer profit des avantages de la chaux éteinte mentionnés ci-dessus ni de mettre en évidence les inconvénients liés à l'utilisation de celle-ci et que la présente invention cherche justement à solutionner.

De manière plus particulière, ledit deuxième composant présente des particules présentant un d₃ supérieur à 0,1 µm, en particulier supérieur à 0,5 µm et un d₉₈ inférieur ou égal à 250 µm, de préférence inférieur ou égal à 200 µm.

La notation dₓ représente un diamètre, exprimé en µm, par rapport auquel X % des particules ou grains mesurées sont plus petites.

Dans une forme de réalisation particulièrement avantageuse selon la présente invention, ledit deuxième composant présente des particules présentant un d₉₃ inférieur ou égal à 90 µm.

Dans une forme de réalisation préférentielle selon la présente invention, ledit deuxième composant à base de chaux éteinte pulvérulente présente un volume poreux total calculé selon la méthode BJH de désorption d'azote supérieur ou égal à 0,02 cm³/g, de préférence supérieur ou égal à 0,025 cm³/g.

Avantageusement, ledit deuxième composant à base de chaux éteinte pulvérulente présente un volume poreux total calculé selon la méthode BJH de désorption d'azote inférieur ou égal à 0,07 cm³/g, de préférence inférieur ou égal à 0,06 cm³/g.

Par « volume poreux total» au sens de la présente invention, on entend le volume total des pores dont la taille est comprise entre 17 et 1000 Å (1,7 et 100 nm), mesuré par manométrie d'adsorption d'azote et calculé selon la méthode BJH, après dégazage sous vide à 190°C pendant au moins 2 heures.

Avantageusement, ledit deuxième composant à base de chaux éteinte présente une densité en vrac mesurée selon la norme EN 459-2 supérieure à 350 kg/m³, de préférence supérieure à 400 kg/m³ et inférieure à 600 kg/m³, en particulier inférieure à 550 kg/m³.

De manière préférentielle, la composition selon la présente invention comprend en outre un entraîneur d'air tel qu'un surfactant ou tensioactif, en particulier choisi dans le groupe des sulfates ou sulfonates d'alkyle, des alcools gras éthoxylés, des copolymères à blocs et de leurs mélanges.

Dans une variante selon l'invention, la composition de liant peut comprendre en outre un ou plusieurs agents de rétention d'eau, par exemple des éthers cellulosiques ou des gommes de guar, leurs dérivés et leurs mélanges.

Dans encore une autre variante selon la présente invention, la composition de liant comprend en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates ou mélamines formaldéhydes, des colloïdes minéraux, en particulier la silice et les argiles, et leurs mélanges.

Avantageusement, la composition selon l'invention comprend également en outre un agent hydrophobant choisi dans le groupe des sels d'acides gras comme les stéarates et les oléates, des huiles végétales et minérales, des silanes, des siloxanes et de leurs mélanges.

De manière particulièrement avantageuse, la composition selon la présente invention comprend en outre un troisième composant organique choisi dans le groupe des latex industriels comme par exemple les copolymères d'acétate de polyvinyle/éthylène, d'acétate de polyvinyle/versatate, de styrol / butadiène et analogues.

D'autres formes de réalisation de la composition de liant pour enduits et mortiers perfectionnés suivant l'invention sont indiquées dans les revendications annexées.

L'invention a aussi pour objet un système d'enduits ou mortiers perfectionnés comprenant un agrégat de type minéral et la composition selon la présente invention, telle que mentionnée ci-dessus.

La composition de liant pour mortiers et enduits comprend un premier composant minéral conventionnel et un deuxième composant à base de chaux éteinte pulvérulente. Ledit deuxième composant à base de chaux éteinte pulvérulente présente une surface spécifique calculée selon la méthode BET inférieure à 12 m²/g, en particulier inférieure à 11 m²/g, avantageusement inférieure à 10 m²/g, de préférence inférieure à 9 m²/g.

Avantageusement, ledit deuxième composant présente une surface spécifique calculée selon la méthode BET inférieure à 8,5 m²/g, de préférence inférieure à 8 m²/g, de manière préférentielle, inférieure à 7,5 m²/g et en particulier inférieure à 7 m²/g.

Ledit premier composant minéral conventionnel est choisi dans le groupe constitué des ciments, des liants à maçonner, des liants pouzzolaniques et hydrauliques, du plâtre (« gypsum » en anglais) et de leurs mélanges.

Avantageusement, les ciments sont choisis dans le groupe des ciments courants (gris ou blanc), des ciments réfractaires, alumineux fondus, prompts, des ciments portland, des laitiers de hauts-fourneaux, des cendres volantes et de leurs mélanges.

Ledit deuxième composant est présent en une quantité égale ou supérieure à 12 % en poids, de préférence égale ou supérieure à 15 % en poids, particulièrement égale ou supérieure à 20 % en poids, en particulier égale ou supérieure à 30 % en poids, avantageusement égale ou supérieure à 40 % en poids et égale ou inférieure à 80 % en poids, en particulier égale ou inférieure à 70 %, en particulier égale ou inférieure à 60 % en poids, par rapport au poids total de ladite composition de liant.

De manière plus particulière, ledit deuxième composant présente des particules présentant un d₃ supérieur à 0,1 µm, en particulier supérieur à 0,5 µm et un d₉₈ inférieur ou égal à 250 µm, de préférence inférieur ou égal à 200 µm.

Dans une forme de réalisation particulièrement avantageuse selon la présente invention, ledit deuxième composant présente des particules présentant un d₉₃ inférieur ou égal à 90 µm.

Dans une forme de réalisation préférentielle selon la présente invention, ledit deuxième composant à base de chaux éteinte pulvérulente présente un volume poreux total calculé selon la méthode BJH de désorption d'azote supérieur ou égal à 0,02 cm³/g, de préférence supérieur ou égal à 0,025 cm³/g.

De préférence, ledit deuxième composant à base de chaux éteinte pulvérulente présente un volume poreux total calculé selon la méthode BJH de désorption d'azote inférieur ou égal à 0,07 cm³/g, de préférence inférieur ou égal à 0,06 cm³/g.

Dans une forme de réalisation préférentielle selon la présente invention, le système tel que mentionné ci-dessus est sous forme sèche, prêt à gâcher avec de l'eau.

Dans une variante selon la présente invention, le système comprend en outre de l'eau et est ainsi sous forme prêt à l'emploi.

Avantageusement, ledit système selon l'invention comprend en outre un entraîneur d'air tel qu'un surfactant ou tensioactif, en particulier choisi dans le groupe des sulfates ou sulfonates d'alkyle, des alcools gras éthoxylés, des copolymères à blocs et de leurs mélanges, qui peut être ajouté à l'agrégat, à la composition de liant ou au système après ou pendant le mélange de ladite composition de liant et des agrégats.

Dans un mode particulier de la présente invention, le système comprend en outre un ou plusieurs agent de rétention d'eau, par exemple des éthers cellulosiques ou des gommes de guar, leurs dérivés et leurs mélanges, qui peut être ajouté à l'agrégat, à la composition de liant ou au système après ou pendant le mélange de ladite composition de liant et des agrégats.

Dans un autre mode préféré de l'invention, le système comprend en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates ou des mélamines formaldéhydes, des colloïdes minéraux, en particulier la silice et les argiles, et leurs mélanges, qui peut être ajouté à l'agrégat, à la composition de liant ou au système après ou pendant le mélange de ladite composition de liant et des agrégats.

Dans encore un autre mode préféré de l'invention, le système comprend en outre un agent hydrophobant choisi dans le groupe des sels d'acides gras comme les stéarates et les oléates, des huiles végétales et minérales, des silanes, des siloxanes et de leurs mélanges, qui peut être ajouté à l'agrégat, à la composition de liant ou au système après ou pendant le mélange de ladite composition de liant et des agrégats.

Dans une forme préférentielle de l'invention, le système comprend en outre un troisième liant organique choisi dans le groupe des latex industriels à base de copolymères d'acétate de polyvinyle/éthylène, d'acétate de polyvinyle/versatate, de styrol / butadiène et analogues, qui peut être ajouté à l'agrégat, à la composition de liant ou au système après ou pendant le mélange de ladite composition de liant et des agrégats.

D'autres formes de réalisation du système d'enduits ou mortiers perfectionnés comprenant un agrégat de type minéral selon l'invention sont indiquées dans les revendications annexées.

L'invention se rapporte également à une utilisation d'une composition de liant selon la présente invention dans un enduit perfectionné pour réduire l'inhibition de la fonctionnalité des additifs organiques dans un enduit perfectionné.

L'invention se rapporte également à une utilisation d'une composition de liant selon la présente invention, dans un mortier perfectionné pour réduire l'inhibition de la fonctionnalité des additifs organiques dans un mortier perfectionné.

Avantageusement, ladite utilisation fait appel à des agrégats qui présentent une taille de particule telle que d₅ est supérieur ou égal à 63 µm et d₉₈ est inférieur ou égal à 4 mm.

D'autres formes d'utilisation de la composition sont mentionnées dans les revendications annexées.

D'autres caractéristiques, détails et avantages de l'invention ressortiront de la description donnée ci-après, à titre non limitatif et en faisant référence aux exemples.

### Exemples.-

### Exemple 1.-: Impact de la chaux hydratée à basse surface spécifique dans un enduit

La composition de liant pour enduit à haute valeur ajoutée mentionnée au tableau 1 a été préparée à l'aide des composants suivants et dans les proportions indiquées:

**Tableau 1.-**

| Produits | Proportion (% en poids) |
|---|---|
| Ciment CEM I 42.5 R | 51 % |
| Chaux hydratée | 47 % |
| Poudre de latex redispersable (Vinnapas 8031 H) | 0,4 % |
| Rétenteur d'eau (Tylose MH 15000 YP4) | 0,5 % |
| Entraineur d'air (Hostapur OSB) | 0,1 % |
| Hydrophobant (Zinkum 5) | 1 % |

Dans cette formulation, une chaux à haute surface spécifique (HS) est comparée à deux chaux de basse surface spécifique (BS), et une chaux standard (STD) de surface spécifique classique, selon le tableau 2.

Par l'expression « surface spécifique » utilisée dans la présente invention, on entend la surface spécifique mesurée par manométrie d'adsorption d'azote et calculée selon le modèle de Brunauer, Emmett et Teller (méthode BET), après dégazage sous vide à 190°C pendant au moins 2 heures.

**Tableau 2.-**

| Produit | Surface BET (m²/g) | Volume poreux BJH (cm³/g) |
|---|---|---|
| Chaux HS | 45,1 | 0,24 |
| Chaux STD - 1 | 15,9 | 0,08 |
| Chaux BS1 | 8,4 | 0,04 |
| Chaux BS2 | 7,2 | 0,04 |

Un enduit est préparé au départ du liant précité par ajout de sable siliceux, de façon à obtenir la composition massique mentionnée au tableau 3.

**Tableau 3.-**

| Produits | Proportion (% en poids) |
|---|---|
| Ciment CEMI 42.5 R | 13 % |
| Chaux hydratée | 12 % |
| Poudre de latex redispersable (Vinnapas 8031 H) | 0,1 % |
| Rétenteur d'eau (Tylose MH 15000 YP4) | 0,12 % |
| Entraineur d'air (Hostapur OSB) | 0,02 % |
| Hydrophobant (Zinkum 5) | 0,3 % |
| Sable siliceux (0,1-0,6 mm) | 74,5 % |

Le taux de gâchage de l'enduit frais (Eau/Solide, E/S) selon le tableau 3 est ajusté afin d'obtenir une consistance (étalement) de la pâte de 175±5 mm selon la norme EN1015-3. Les caractéristiques des enduits sont mentionnées au tableau 4. La densité de l'enduit frais et l'air entraîné sont évalués d'après les normes EN1015-6 et EN1015-7. La rétention d'eau est évaluée avec un dispositif d'après la norme ASTM C91 avec une dépression de 7000 Pa pendant 15 min, avec la même consistance de la pâte (étalement de 175±5 mm). Seule la valeur de rétention d'eau après 15 min est présentée.

**Tableau 4.-**

| Enduit à base de | E/S [%] | Etalement [mm] | Densité | Air [%] | Rétention d'eau 15 min [%] |
|---|---|---|---|---|---|
| Chaux HS | 28,4 | 178 | 1,7 | 14 | 92 |
| Chaux STD - 1 | 21,5 | 177 | 1,6 | 18 | 94 |
| Chaux BS1 | 21,3 | 170 | 1,5 | 22 | 95 |
| Chaux BS2 | 20,4 | 175 | 1,5 | 24 | 96 |

Comme on peut le constater, les enduits à base de chaux à basse surface spécifique (BS) ont une demande d'eau (E/S) plus faible. Il est bien connu qu'une faible demande en eau baisse le risque de retrait et de fissures dans l'enduit, et augmente les résistances mécaniques d'une formulation incluant un liant hydraulique.

On observe également que les chaux à basse surface spécifique permettent aux additifs organiques de mieux remplir leur rôle d'entraineur d'air ou de rétenteur d'eau. Un taux d'air plus élevé donne à l'enduit frais une meilleure plasticité / maniabilité, augmente son rendement, ainsi que le pouvoir isolant et la résistance aux cycles de gel/dégel de l'enduit durci. Une meilleure rétention d'eau de l'enduit frais augmente sa tolérance vis-à-vis de supports variables, et à haute porosité.

Remarquons qu'une augmentation de la rétention d'eau au-delà de 92% est typiquement très délicate à obtenir tout en maintenant une bonne maniabilité. Cette forte rétention d'eau est en outre très recherchée par l'homme de métier.

### Exemple 2.- Impact de la chaux hydratée à basse surface spécifique dans un mortier de maçonnerie perfectionné (II)

La composition de liant pour mortier de maçonnerie mentionnée au tableau 5 a été préparée à l'aide des composants suivants et dans les proportions indiquées:

**Tableau 5.-**

| Produits | Proportion (% en poids) |
|---|---|
| Ciment CEM I 42.5 N | 84,4 % |
| Chaux éteinte | 15,4 % |
| Entraineur d'air (Hostapur OSB) | 0,1 % |
| Rétenteur d'eau (Tylose MH 15003 P6) | 0,1 % |

Dans cette formulation, une chaux à basse surface spécifique (BS) est comparée à une chaux standard (STD) de surface spécifique classique selon le tableau 6 :

**Tableau 6.-**

| Produit | Surface BET (m²/g) | Volume poreux BJH (cm³/g) |
|---|---|---|
| Chaux STD - 3 | 15,2 | 0,08 |
| Chaux BS2 | 7,2 | 0,04 |

Un mortier de maçonnerie perfectionné est préparé au départ du liant précité par ajout de sable siliceux, de façon à obtenir la composition massique mentionnée au tableau 7 :

**Tableau 7.-**

| Produits | Proportion (% en poids) |
|---|---|
| Ciment CEM I 42.5 N | 11 % |
| Chaux éteinte | 2 % |
| Filler calcaire | 11 % |
| Entraineur d'air (Hostapur OSB) | 0,01 % |
| Rétenteur d'eau (Tylose MH 15003 P6) | 0,01 % |
| Sable siliceux (0,1- 1,2 mm) | 76 % |

Le taux de gâchage du mortier frais (Eau/Solide, E/S) selon le tableau 5 est ajusté afin d'obtenir une consistance (étalement) de la pâte de 175±5 mm selon la norme EN1015-3. Les caractéristiques des mortiers sont mentionnées au tableau 8.

La densité du mortier frais et l'air entraîné sont évalués d'après les normes EN1015-6 et EN1015-7.

La rétention d'eau est évaluée avec un dispositif d'après la norme ASTM C91 avec une dépression de 7000 Pa pendant 15 min, avec la même consistance de la pâte. Seule la valeur de rétention d'eau après 15 min est présentée.

**Tableau 8.-**

| Mortier à base de | E/S [%] | Etalement [mm] | Densité | Air [%] | Rétention d'eau 15 min [%] |
|---|---|---|---|---|---|
| Chaux STD - 3 | 14,1 | 173 | 1,8 | 18,0 | 72 |
| Chaux BS2 | 13,7 | 176 | 1,6 | 25,0 | 75 |

De nouveau, la chaux à basse surface spécifique (BS) permet à l'entraineur d'air et à l'additif de rétention d'eau de mieux remplir leur rôle, avec la possibilité d'éventuellement diminuer leur taux dans la composition ou d'augmenter la rétention d'eau à quantité égale d'additifs. Selon cet exemple, l'impact sur l'entraînement d'air est particulièrement marqué et intéressant, l'impact sur la rétention d'eau étant finalement limité de par la faible teneur en additif de rétention d'eau.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Composition de liant pour mortiers et enduits perfectionnés, comprenant un premier composant minéral conventionnel choisi dans le groupe constitué des ciments, des liants à maçonner, des liants pouzzolaniques et hydrauliques, du plâtre et de leurs mélanges et un deuxième composant à base de chaux éteinte pulvérulente, dans laquelle ledit deuxième composant à base de chaux éteinte pulvérulente présente une surface spécifique mesurée par manométrie d'absorption d'azote après dégazage sous vide à 190°C pendant au moins deux heures et calculée selon la méthode BET inférieure à 12 m²/g, avantageusement inférieure à 11 m²/g, en particulier inférieure à 10 m²/g, de préférence inférieure à 9 m²/g, et dans laquelle ledit deuxième composant est présent en une quantité égale ou supérieure à 12 % en poids, de préférence égale ou supérieure à 15 % en poids, particulièrement égale ou supérieure à 20 % en poids, en particulier égale ou supérieure à 30 % en poids, avantageusement égale ou supérieure à 40% en poids et égale ou inférieure à 80% en poids, avantageusement égale ou inférieure à 70% en poids, en particulier égale ou inférieure à 60 % en poids, par rapport au poids total de ladite composition de liant.

2. Composition de liant selon la revendication 1 dans laquelle ledit deuxième composant présente une surface spécifique calculée selon la méthode BET inférieure à 8,5 m²/g, de préférence inférieure à 8 m²/g, de manière préférentielle, inférieure à 7,5 m²/g et en particulier inférieure à 7 m²/g.

3. Composition de liant selon la revendication 2, dans laquelle ledit ciment est choisi dans le groupe des ciments courants, des ciments réfractaires, alumineux fondus, prompts, des ciments portland, des laitiers de hauts-fourneaux, des cendres volantes et de leurs mélanges.

4. Composition de liant selon l'une quelconque des revendications 1 à 3, dans laquelle ledit deuxième composant présente des particules présentant un d₃ supérieur à 0,1 µm, en particulier supérieur à 0,5 µm et un d₉₈ inférieur ou égal à 250 µm, de préférence inférieur ou égal à 200 µm.

5. Composition de liant selon l'une quelconque des revendications 1 à 4, dans laquelle ledit deuxième composant présente des particules présentant un d₉₃ inférieur ou égal à 90 µm.

6. Composition de liant selon l'une quelconque des revendications 1 à 5, dans laquelle ledit deuxième composant à base de chaux éteinte pulvérulente présente un volume poreux total calculé selon la méthode BJH de désorption d'azote supérieur ou égal à 0,02 cm³/g, de préférence supérieur ou égal à 0,025 cm³/g.

7. Composition de liant selon l'une quelconque des revendications 1 à 6, dans laquelle ledit deuxième composant à base de chaux éteinte pulvérulente présente un volume poreux total calculé selon la méthode BJH de désorption d'azote inférieur ou égal à 0,07 cm³/g, de préférence inférieur ou égal à 0,06 cm³/g.

8. Composition de liant selon l'une quelconque des revendications 1 à 7, comprenant en outre entraîneur d'air tel qu'un surfactant ou tensioactif, en particulier choisi dans le groupe des sulfates ou sulfonates d'alkyle, des alcools gras éthoxylés, des copolymères à blocs et de leurs mélanges.

9. Composition de liant selon l'une quelconque des revendications 1 à 8, comprenant en outre un ou plusieurs agent de rétention d'eau, par exemple des éthers cellulosiques ou des gommes de guar, leurs dérivés et leurs mélanges.

10. Composition de liant selon l'une quelconque des revendications 1 à 9, comprenant en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates ou des mélamines formaldéhydes, des colloïdes minéraux, en particulier la silice et les argiles, et leurs mélanges.

11. Composition selon l'une quelconque des revendications 1 à 10, comprenant en outre un agent hydrophobant choisi dans le groupe des sels d'acides gras comme les stéarates et les oléates, des huiles végétales et minérale, des silanes, des siloxanes et de leurs mélanges.

12. Composition selon l'une quelconque des revendications 1 à 11, comprenant en outre un troisième composant organique choisi dans le groupe des latex industriels comme par exemple les copolymères à base d'acétate de polyvinyle/éthylène, d'acétate de polyvinyle/versatate, de styrol / butadiène.

13. Composition selon l'une quelconque des revendications 1 à 12, dans laquelle ledit deuxième composant à base de chaux éteinte présente une densité en vrac mesurée selon la norme selon la norme EN 459-2 supérieure à 350 kg/m³, de préférence supérieure à 400 kg/m³ et inférieure à 600 kg/m³, en particulier inférieure à 550 kg/m³.

14. Système d'enduits ou mortiers perfectionnés comprenant un agrégat de type minéral et la composition selon l'une quelconque des revendications 1 à 12.

15. Système selon la revendication 14, **caractérisé en ce qu'**il est sous forme sèche, prêt à gâcher avec de l'eau.

16. Système selon la revendication 14, comprenant en outre de l'eau et étant ainsi sous forme prêt à l'emploi.

17. Système selon l'une quelconque des revendications 14 à 16, comprenant en outre un entraîneur d'air tel qu'un surfactant ou tensioactif, en particulier choisi dans le groupe des sulfates ou sulfonates d'alkyle, des alcools gras éthoxylés, des copolymères à blocs et de leurs mélanges.

18. Système selon l'une quelconque des revendications 14 à 17, comprenant en outre un ou plusieurs agent de rétention d'eau, par exemple des éthers cellulosiques ou des gommes de guar, leurs dérivés et leurs mélanges.

19. Système selon l'une quelconque des revendications 14 à 18, comprenant en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates ou des mélamines formaldéhydes, des colloïdes minéraux, en particulier la silice et les argiles, et leurs mélanges.

20. Système selon l'une quelconque des revendications 14 à 19, comprenant en outre un agent hydrophobant choisi dans le groupe des sels d'acides gras comme les stéarates et les oléates, des huiles végétales et minérale, des silanes, des siloxanes et de leurs mélanges.

21. Système selon l'une quelconque des revendications 14 à 20, comprenant en outre un troisième composant organique choisi dans le groupe des latex industriels comme par exemple à base de copolymères d'acétate de polyvinyle/éthylène, d'acétate de polyvinyle/versatate, de styrol / butadiène.

22. Utilisation d'une composition de liant selon l'une quelconque des revendications 1 à 13 dans un enduit perfectionné pour réduire l'inhibition de la fonctionnalité des additifs organiques dans un enduit perfectionné.

23. Utilisation d'une composition de liant selon l'une quelconque des revendications 1 à 13, dans un mortier perfectionné pour réduire l'inhibition de la fonctionnalité des additifs organiques dans un mortier perfectionné.

24. Utilisation selon la revendication 22 ou 23, comprenant en outre des agrégats qui présentent une taille de particules telles que d₅ est supérieur ou égale à 63 µm et d₉₈ est inférieur ou égal à 4 mm.

## Patentansprüche

1. Bindemittelzusammensetzung für verbesserte Mörtel und Beschichtungen, umfassend einen ersten herkömmlichen mineralischen Bestandteil ausgewählt aus der Gruppe bestehend aus Zementen, Mauerbindemitteln, puzzolanischen und hydraulischen Bindemitteln, Gips und deren Gemische, und einen zweiten Bestandteil auf der Grundlage von pulverförmigem Löschkalk, wobei der zweite Bestandteil auf der Grundlage von pulverförmigem Löschkalk eine spezifische Oberfläche, gemessen durch Stickstoffabsorptionsmanometrie nach der Entgasung unter Vakuum bei 190°C während mindestens zwei Stunden und berechnet gemäß dem BET-Verfahren von weniger als 12 m²/g, vorteilhafterweise weniger als 11 m²/g, insbesondere weniger als 10 m²/g, vorzugsweise weniger als 9m²/g aufweist, und wobei der zweite Bestandteil in einer Menge von gleich oder mehr als 12 Gew.-%, vorzugsweise gleich oder mehr als 15 Gew.-%, im Besonderen gleich oder mehr als 20 Gew.-%, insbesondere gleich oder mehr als 30 Gew.-%, vorteilhafterweise gleich oder mehr als 40 Gew.-% und gleich oder weniger als 80 Gew.-%, vorteilhafterweise gleich oder weniger als 70 Gew.-%, insbesondere gleich oder weniger als 60 Gew.-% vorhanden ist, mit Bezug auf das Gesamtgewicht der Bindemittelzusammensetzung.

2. Bindemittelzusammensetzung nach Anspruch 1, wobei der zweite Bestandteil eine spezifische Oberfläche, berechnet gemäß dem BET-Verfahren, von weniger als 8,5 m²/g, vorzugsweise weniger als 8 m²/g, bevorzugterweise weniger als 7,5 m²/g und insbesondere weniger als 7 m²/g aufweist.

3. Bindemittelzusammensetzung nach Anspruch 2, wobei der Zement ausgewählt ist aus der Gruppe der herkömmlichen Zemente, der feuerfesten Zemente, geschmolzenen Tonerdzemente, Schnellzemente, der Portlandzemente, der Hochofenschlacken, der Flugaschen und deren Gemische.

4. Bindemittelzusammensetzung nach einem der Ansprüche 1 bis 3, wobei der zweite Bestandteil Partikel aufweist, die einen d₃ von mehr als 0,1 µm, insbesondere mehr als 0,5 µm, und einen d₉₈ von weniger als oder gleich 250 µm, vorzugsweise weniger als oder gleich 200 µm aufweisen.

5. Bindemittelzusammensetzung nach einem der Ansprüche 1 bis 4, wobei der zweite Bestandteil Partikel aufweist, die einen d₉₃ von weniger als oder gleich 90 µm aufweisen.

6. Bindemittelzusammensetzung nach einem der Ansprüche 1 bis 5, wobei der zweite Bestandteil auf der Grundlage von pulverförmigem Löschkalk ein poröses Gesamtvolumen, berechnet gemäß dem BJH-Verfahren der Stickstoffdesorption, von mehr als oder gleich 0,02 cm³/g, vorzugsweise mehr als oder gleich 0,025 cm³/g, aufweist.

7. Bindemittelzusammensetzung nach einem der Ansprüche 1 bis 6, wobei der zweite Bestandteil auf der Grundlage von pulverförmigem Löschkalk ein poröses Gesamtvolumen, berechnet gemäß dem BJH-Verfahren der Stickstoffdesorption, von weniger als oder gleich 0,07 cm³/g, vorzugsweise weniger als oder gleich 0,06 cm³/g aufweist.

8. Bindemittelzusammensetzung nach einem der Ansprüche 1 bis 7, ferner umfassend einen Luftporenbildner wie z. B. ein Benetzungsmittel oder Tensid, insbesondere ausgewählt aus der Gruppe der Sulfate oder Alkylsulfonate, der ethoxylierten Fettalkohole, der Blockcopolymere und deren Gemische.

9. Bindemittelzusammensetzung nach einem der Ansprüche 1 bis 8, ferner umfassend ein oder mehrere Wasserrückhaltemittel, z. B. Celluloseether oder Guargummis, deren Derivate und deren Gemische.

10. Bindemittelzusammensetzung nach einem der Ansprüche 1 bis 9, ferner umfassend ein Rheologie-Modifikationsmittel, insbesondere ausgewählt aus der Gruppe der Hydrocolloide, im Besonderen aus der Gruppe der Polysaccharide, der Stärkederivate, der Alginate, der Guargummis und deren Derivate, der Xanthangummis und deren Derivate, den Caraghenangummis und deren Derivate, der Succinoglycane, der Fliessmittel wie der Polycarboxylate oder der Melamin-Formaldehyde, der mineralischen Colloide, insbesondere dem Siliciumdioxid und den Tonen und deren Gemische.

11. Zusammensetzung nach einem der Ansprüche 1 bis 10, ferner umfassend ein Hydrophobiermittel ausgewählt aus der Gruppe der Fettsäuresalze wie den Stearaten und den Oleaten, den pflanzlichen und mineralischen Ölen, den Silanen, den Siloxanen und deren Gemische.

12. Zusammensetzung nach einem der Ansprüche 1 bis 11, ferner umfassend einen dritten organischen Bestandteil ausgewählt aus der Gruppe der industriellen Latizes wie z. B. den Copolymeren auf der Grundlage von Polyvinylacetat/ethylen, Polyvinylacetat/versatat, Styrol/Butadien.

13. Zusammensetzung nach einem der Ansprüche 1 bis 12, wobei der zweite Bestandteil auf der Grundlage von pulverförmigem Löschkalk eine Schüttdichte, gemessen gemäß der Norm EN 459-2, von mehr als 350 kg/m³,vorzugsweise mehr als 400 kg/m³ und weniger als 600 kg/m³, insbesondere weniger als 550 kg/m³ aufweist.

14. System für verbesserte Beschichtungen oder Mörtel, umfassend ein Aggregat mineralischer Art und die Zusammensetzung nach einem der Ansprüche 1 bis 12.

15. System nach Anspruch 14, **dadurch gekennzeichnet, dass** es eine trockene Form aufweist, die zum Anrühren mit Wasser bereit ist.

16. System nach Anspruch 14, ferner umfassend Wasser und somit in einer anwendungsbereiten Form ist.

17. System nach einem der Ansprüche 14 bis 16, ferner umfassend einen Luftporenbildner wie ein Benetzungsmittel oder ein Tensid, insbesondere ausgewählt aus der Gruppe der Sulfate oder Alkylsulfonate, der ethoxylierten Fettalkohole, der Blockcopolymere und deren Gemische .

18. System nach einem der Ansprüche 14 bis 17, weiter umfassend ein oder mehrere Wasserrückhaltemittel, z. B. Celluloseether oder Guargummi, deren Derivate und deren Gemische.

19. System nach einem der Ansprüche 14 bis 18, ferner umfassend ein Rheologie-Modifikationsmittel, insbesondere ausgewählt aus der Gruppe der Hydrocolloide, im Besonderen aus der Gruppe der Polysaccharide, der Stärkederivate, der Alginate, der Guargummis und deren Derivate, der Xanthangummis und deren Derivate, den Caraghenangummis und deren Derivate, der Succinoglycane, der Fliessmittel wie der Polycarboxylate oder der Melamin-Formaldehyde, der mineralischen Colloide, insbesondere dem Siliciumdioxid und den Tonen und deren Gemische.

20. System nach einem der Ansprüche 14 bis 19, ferner umfassend ein Hydrophobiermittel, ausgewählt aus der Gruppe der Fettsäuresalze wie den Stearaten und den Oleaten, den pflanzlichen und mineralischen Ölen, den Silanen, den Siloxanen und deren Gemische.

21. System nach einem der Ansprüche 14 bis 20, ferner umfassend einen dritten organischen Bestandteil ausgewählt aus der Gruppe der industriellen Latizes wie z. B. auf der Grundlage von Polyvinylacetat/ethylen-, Polyvinylacetat/versatat-, Styrol-/Butadien-Copoplymeren.

22. Verwendung einer Bindemittelzusammensetzung nach einem der Ansprüche 1 bis 13 in einer verbesserten Beschichtung, um die Hemmung der Funktion der organischen Zusatzstoffe in einer verbesserten Beschichtung zu reduzieren.

23. Verwendung einer Bindemittelzusammensetzung nach einem der Ansprüche 1 bis 13 in einem verbesserten Mörtel, um die Hemmung der Funktion der organischen Zusatzstoffe in einem verbesserten Mörtel zu reduzieren.

24. Verwendung nach Anspruch 22 oder 23, ferner umfassend Aggregate, die eine Partikelgröße derart aufweisen, dass d₅ größer als oder gleich 63 µm ist und d₉₈ kleiner als oder gleich 4 mm ist.

## Claims

1. A binder composition for improved mortars and coatings, comprising a first standard mineral constituent selected from the group consisting of cements, masonry binders, pozzolanic and hydraulic binders, plaster and mixtures thereof and a second constituent based on powdered slaked lime, wherein said second constituent based on powdered slaked lime has a specific surface measured by nitrogen absorption manometry after vacuum degassing at 190°C for at least two hours and calculated according to the BET method which is lower than 12 m²/g, advantageously lower than 11 m²/g, especially lower than 10 m²/g, preferably lower than 9 m²/g, and wherein said second constituent is present in an amount equal to or greater than 12% by weight, preferably equal to or greater than 15% by weight, particularly equal to or greater than 20% by weight, in particular equal to or greater than 30% by weight, advantageously equal to or greater than 40% by weight and equal to or lower than 80% by weight, advantageously equal to or lower than 70% by weight, in particular equal to or lower than 60% by weight, based on the total weight of said binder composition.

2. The binder composition according to claim 1 wherein said second constituent has a calculated specific surface according to the BET method which is lower than 8.5 m²/g, preferably lower than 8 m²/g, preferentially lower than 7.5 m²/g and in particular lower than 7 m²/g.

3. The binder composition according to claim 2, wherein said cement is selected from the group of common cements, refractory cements, calcium aluminate cement, prompts, portland cements, blast furnace slags, fly ash and mixtures thereof.

4. The binder composition according to any of claims 1 to 3, wherein said second constituent has particles having a d₃ greater than 0.1 µm, in particular greater than 0.5 µm and a d₉₈ lower than or equal to 250 µm, preferably lower than or equal to 200 µm.

5. The binder composition according to any of claims 1 to 4, wherein said second constituent has particles having a d₉₃ lower than or equal to 90 µm.

6. The binder composition according to any of claims 1 to 5, wherein said second constituent based on powdered slaked lime has a total pore volume calculated according to the BJH method of nitrogen desorption greater than or equal to 0.02 cm³/g, preferably greater than or equal to 0.025 cm³/g.

7. The binder composition according to any of claims 1 to 6, wherein said second constituent based on slaked lime has a total pore volume calculated according to the BJH method of nitrogen desorption lower than or equal to 0.07 cm³/g, preferably lower than or equal to 0.06 cm³/g.

8. The binder composition according to any of claims 1 to 7, further comprising an air entrainment agent such as a surfactant or surface active agent, in particular selected from the group of alkyl sulfates or sulfonates, ethoxylated fatty alcohols, block copolymers and mixtures thereof.

9. The binder composition according to any of claims 1 to 8, further comprising one or more water retention agents, for example cellulosic ethers or guar gums, derivatives thereof and mixtures thereof.

10. The binder composition according to any of claims 1 to 9, further comprising a rheology modifier, in particular selected from the group of hydrocolloids, more particularly from the group of polysaccharides, starch derivatives, alginates, guar gums and derivatives thereof, xanthan gums and derivatives thereof, caraghenan gums and derivatives thereof, succinoglycans, superplasticizers such as polycarboxylates or formaldehyde melamines, mineral colloids, in particular silica and clays, and mixtures thereof.

11. The composition according to any of claims 1 to 10, further comprising a hydrophobing agent selected from the group of salts of fatty acids such as stearates and oleates, vegetable and mineral oils, silanes, siloxanes and mixtures thereof.

12. The composition according to any of claims 1 to 11, further comprising a third organic constituent selected from the group of industrial latexes such as for example copolymers based on polyvinyl acetate/ethylene, polyvinyl acetate/versatate, styrol/butadiene.

13. The composition according to any one of claims 1 to 12, wherein said second constituent based on slaked lime has a bulk density measured according to EN 459-2 standard greater than 350 kg/m³, preferably greater than 400 kg/m³ and lower than 600 kg/m³, in particular lower than 550 kg/m³.

14. An improved plaster or mortar system comprising a mineral-type aggregate and the composition according to any of claims 1 to 12.

15. The system according to claim 14, **characterized in that** it is in dry form, ready to be mixed with water.

16. The system according to claim 14, further comprising water and thus being in the ready for use form.

17. The system according to any of claims 14 to 16, further comprising an air entrainment agent such as a surfactant or surface active agent, in particular selected from the group of alkyl sulfates or sulfonates, ethoxylated fatty alcohols, block copolymers and mixtures thereof.

18. The system according to any of claims 14 to 17, further comprising one or more water retention agents, for example cellulosic ethers or guar gums, derivatives thereof and mixtures thereof.

19. The system according to any of claims 14 to 18, further comprising a rheology modifier, in particular selected from the group of hydrocolloids, more particularly from the group of polysaccharides, starch derivatives, alginates, guar gums and derivatives thereof, xanthan gums and derivatives thereof, caraghenan gums and derivatives thereof, succinoglycans, superplasticizers such as polycarboxylates or melamine formaldehyde, mineral colloids, in particular silica and clays, and mixtures thereof.

20. The system according to any of claims 14 to 19, further comprising a hydrophobing agent selected from the group of salts of fatty acids such as stearates and oleates, vegetable and mineral oils, silanes, siloxanes and mixtures thereof.

21. The system according to any of claims 14 to 20, further comprising a third organic constituent selected from the group of industrial latexes such as for example based on copolymers of polyvinyl acetate/ethylene, polyvinyl acetate/versatate, styrol/butadiene.

22. Use of a binder composition according to any of claims 1 to 13 in an improved coating to reduce inhibition of the functionality of organic additives in an improved coating.

23. The use of a binder composition according to any of claims 1 to 13, in an improved mortar to reduce inhibition of the functionality of organic additives in an improved mortar.

24. The use according to claim 22 or 23, further comprising aggregates which have a particle size such that d₅ is greater than or equal to 63 µm and d₉₈ is lower than or equal to 4 mm.
